# EUROPEAN PATENT SPECIFICATION

(11) **EP 2 213 956 B1**
(45) Date of publication and mention of the grant of the patent: **21.11.2012**
(21) Application number: 09151713.6
(22) Date of filing: 30.01.2009
(51) Int. Cl.: F24F 12/00, F24F 3/14, F16F 1/373

(54) **An air treating device**
Luftbehandlungsvorrichtung
Dispositif de traitement de l'air

(43) Date of publication of application: 04.08.2010
(73) Proprietor: Östberg, Hans, 774 35 Avesta (SE)
(72) Inventor: Östberg, Hans, 774 35 Avesta (SE)
(74) Representative: Olsson, Jan

(56) References cited:
- EP-A- 1 662 211
- FR-A- 2 282 090
- GB-A- 2 161 921
- GB-A- 2 284 246
- US-A- 2 881 995
- US-A- 5 183 098
- US-B1- 6 209 622
- US-B1- 6 505 807

## Description

### TECHNICAL FIELD OF THE INVENTION AND BACKGROUND ART

The present invention relates to an air treating device to be arranged inside a building and comprising a casing containing a rotary heat exchanger comprising a body and a motor configured to rotate said body, an arrangement configured to keep said motor at a determined location inside said casing, and means configured to create air flows through said body of the rotary heat exchanger for heat transfer from a warmer such air flow to a colder one.

Such a device is known through EP-A-1 662 211.

The invention is directed to any type of air treating device having such a rotary heat exchanger, and a ventilating device for heat transfer between supply air from the exterior of a building to exhaust air to be conducted to the exterior of the building may be mentioned as one example of such a device. Such a ventilating device will primarily be used for recovering heat energy from said exhaust air, but it may also during very hot summer months in hot regions be used to transfer energy in the opposite direction and accordingly cool said supply air. Another example of an air treating device containing a rotary heat exchanger is an air dehumidifying device.

It has been found that the operation of a said motor, in most cases an electric motor, rotating the body of said rotary heat exchanger may in such devices already known give rise to disturbances.

The operation of such a motor typically generates vibrations, which are transferred to said casing and cause propagation of disturbing noises in the environment of the device. This is particularly the case when said casing is arranged on an internal wall of the building, which is mostly the case. Such noises do then propagate into adjacent rooms of the building and may there disturb people but also different type of equipment.

### SUMMARY OF THE INVENTION

The object of the present invention is to provide an air treating device of the type defined in the introduction in which the problem mentioned above of such devices already known has been addressed.

This object is according to the invention obtained by providing such a device with the features of the characterizing part of appended claim 1..

It has been found that vibrations emanating from the operation of said motor and transferred to said casing of the device may be reduced substantially by this type of floating suspension of said motor with respect to said casing, so that the motor may move with said plate-like member with respect to said casing around a rest position while storing potential energy causing an efficient absorbing of noise through the damping action of the suspending means. It has actually been found that the noise level may by this easily be reduced to be as low as about one order of magnitude lower than in the case of arranging said motor fixed with respect to the casing.

According to an embodiment of the invention said suspending means are configured to suspend said motor with respect to said casing for allowing movement of the motor with respect to said casing in three dimensions, which results in a very efficient noise reduction.

According to another embodiment of the invention said cushioning material is foamed plastic, preferably foamed polyurethane.

According to another embodiment of the invention said members fixed with respect to walls of said casing comprises bottom frames designed to each receive at least one said pad therein so as to allow movement of a said member fixed with respect to said motor by compressing parts of said at least one pad against parts of said frame. Said pads may by this construction reliably be kept in place and properly fulfil their function.

According to another embodiment of the invention said plate-like member has a bridge-like character by hanging freely along the longitudinal extension thereof at a distance from members fixed with respect to walls of said casing. This means that this plate-like member may without any problem be allowed to move with said motor with respect to fixed parts of the casing.

According to another embodiment of the invention said plate-like member is through said pads connected to opposite partition walls fixed inside said casing, and said body of the rotary heat exchanger is advantageously journalled in bearings in said partition walls. This is an efficient and preferred way of obtaining said floating suspension of the motor with respect to the casing of the device.

According to another embodiment of the invention the device comprises a gear box fixedly secured to said motor while forming a rigid unit therewith, and this unit is floatingly suspended with respect to said casing. Accordingly, that the motor is floatingly suspended with respect to said casing also includes the fact that parts, such as a gear box and the like, fixedly secured to said motor or a frame of said motor while being in one piece therewith are floatingly suspended with respect to said casing.

According to another embodiment of the invention said unit is configured to deliver a rotation of the output shaft of said gear box with a number of revolutions being 30-300 rpm, preferably 50-200 rpm, which are numbers of revolutions that are suitable for said body of a rotary heat exchanger in devices of this type.

According to another embodiment of the invention said motor is configured to operate with a number of revolutions of the output shaft thereof of 1000-5000 rpm, preferably 1200-3000 rpm. These are typical numbers of revolutions of an operation of a motor of this type in this type of devices causing said problems of vibrations resulting in noises in such air treating devices already known. However, noises emanating from such a motor operation are remarkably reduced with respect thereto in a device according to the present invention.

According to another embodiment of the invention the device is a device for ventilating one or more rooms of a building while obtaining heat transfer between supply air from the exterior of the building and exhaust air to be conducted to the exterior of the building. Problems with noises resulting from the operation of such devices already known are perfectly addressed by the present invention.

According to another embodiment of the invention the device is an air dehumidifying device.

Further advantages as well as advantageous features of the invention will appear from the following description.

### BRIEF DESCRIPTION OF THE DRAWINGS

With reference to the appended drawings, below follows a specific description of an air treating device according to an embodiment of the invention.

### In the drawings:

- Fig 1: is a schematic view illustrating how an air treating device according to the present invention in form of a ventilating device may be arranged in a building for ventilating the rooms of the building while obtaining heat transfer between exhaust air and supply air,
- Fig 2: is a simplified perspective view of a ventilating device according to en embodiment of the present invention with one wall of the casing thereof removed for showing the interior of the casing,
- Fig 3: is an exploded view illustrating the motor for the body of the rotary heat exchanger and the arrangement for keeping this motor at a determined location inside said casing in the device according to Fig 2,
- Fig 4: is a simplified perspective view obliquely from above illustrating the arrangement of said motor in said device, and
- Fig 5: is a view similar to Fig 4 from another direction and having the same aim as Fig 4.

### DETAILED DESCRIPTION OF AN EMBODIMENT OF THE INVENTION

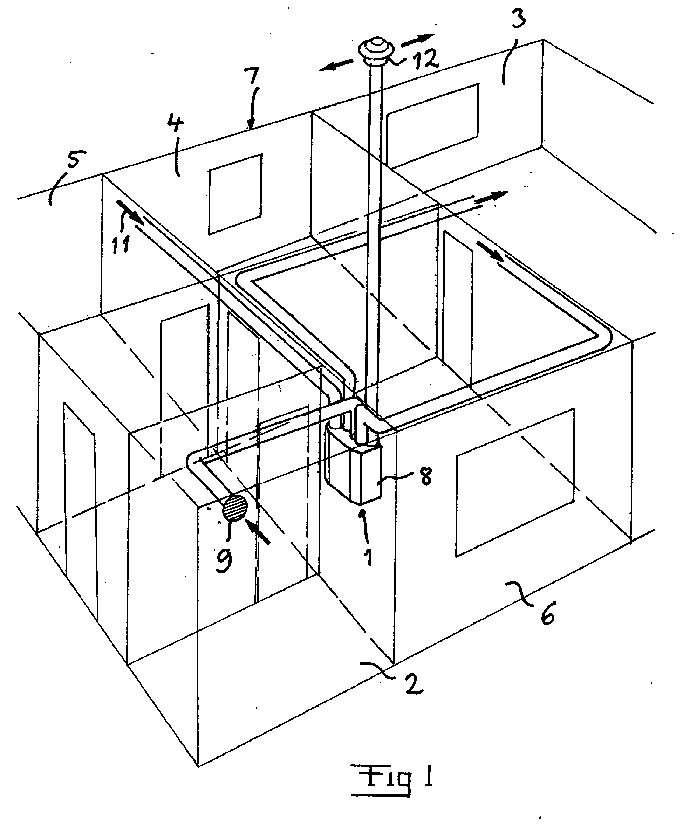

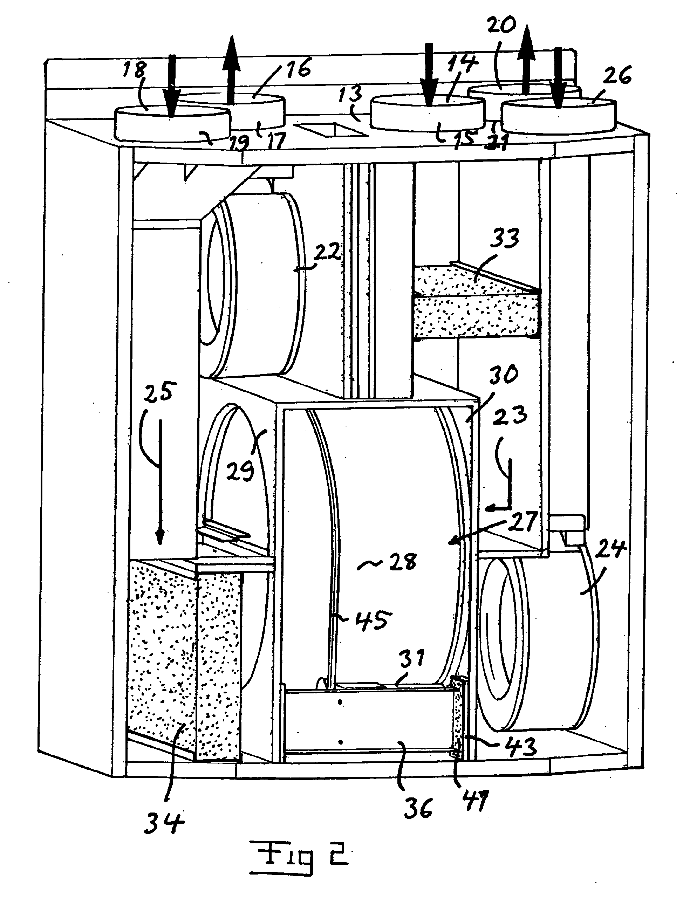

Fig 1 schematically shows an air treating device 1 according to an embodiment of the present invention being a part of a ventilating arrangement for ventilating one or more rooms 2-6 of a building 7. The device 1 comprises a casing 8 having at least four, in this case five, openings arranged on the same side thereof for connecting conduits for conducting supply air from the exterior 9 to the casing 8 before conducting it further into said rooms and exhaust air from the rooms (see 11) to the casing before being exhausted to the exterior (see 12). The construction and the function of a ventilating device 1 of such an arrangement will now be explained while referring to Fig 2.

The casing has on one side 13 thereof:
- a first inlet opening 14 with means 15 for connecting to a conduit for supply air from the exterior of the building,
- a first outlet opening 16 with means 17 for connecting to a conduit for conducting supply air entering the casing through the first inlet opening 14 to said one or more rooms of the building,
- a second inlet opening 18 with means 19 for connecting to a conduit for conducting exhaust air from said one or more rooms, and
- a second outlet opening 20 with means 21 connecting to a conduit for conducting exhaust air entering the casing through said second inlet opening 18 to the exterior of the building.

A first fan member 22 having an impeller with blades curved backwards with respect to the rotation direction of the impeller and a motor for rotation thereof is arranged to create a flow of air in a first path 23 inside the casing from the first inlet 14 to the first outlet 16. A second fan member 24 having an impeller with blades curved backwards with respect to the rotation direction of the impeller and a motor for rotation thereof is arranged to create a flow of air in a second path 25 inside the casing from the second inlet 18 to the second outlet 20. It is also indicated how the casing may have a fifth opening 26 for exhaust air from a kitchen fan for mixing this exhaust air with the other exhaust air in said second path.

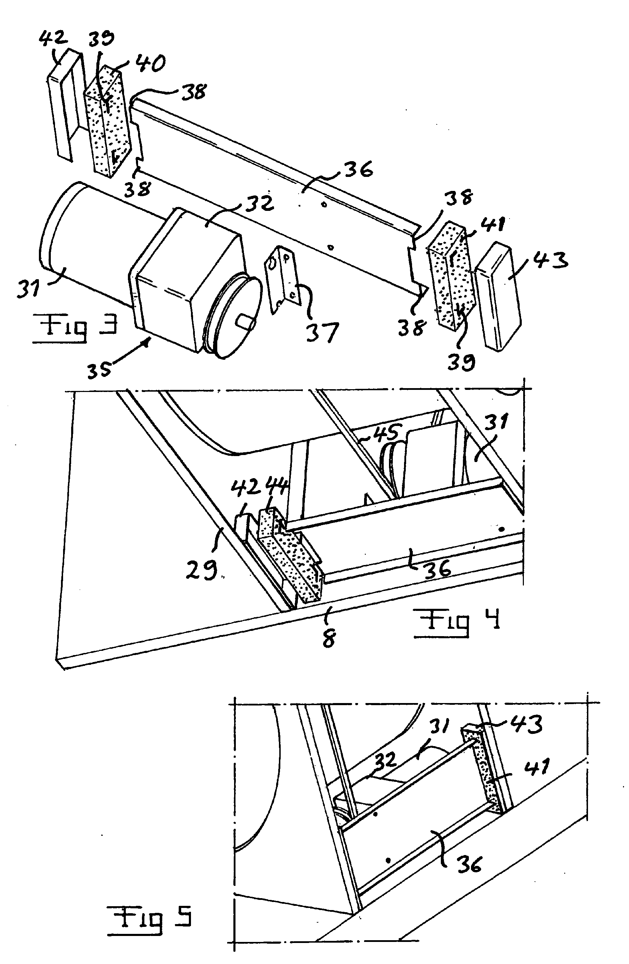

The casing 8 also contains a rotary heat exchanger 27 arranged in said first and second paths 23, 25 for conducting air flows in these two paths through separate rooms of the rotary heat exchanger for heat transfer from the warmer of the two air flows to the colder one. The construction and the function of such a rotary heat exchanger are well known and will not be described in detail here. The rotary heat exchanger has a body 28 with a shape of a circular cylinder made of or containing filling material with a high capacity to absorb and emit heat energy. This body 28 is journalled in bearings in partition walls 29, 30 fixed inside the casing. The body 28 is driven by a rim 45 driven by a motor 31 (see also Fig 3) with a gear box 32 to rotate slowly. Further partition walls separate the casing and seals with respect to each end surface of the body 28, so that half of the body is arranged in said first flow path and the other half of the body in said second flow path. It may here also be referred to EP 1 662 211 A1.

A filter element 33, 34 is arranged in the first and second air flow path, respectively, upstream the rotary heat exchanger 27 for protection thereof against depositions of dust, insects and the like.

The present invention is directed to the arrangement of said motor, which is an electric motor typically operating with a number of revolutions of 1400 rpm or 2800 rpm depending upon the number of poles of the motor. The gear box 32 is needed for obtaining a sufficiently slow rotation of the body 28 of the rotary heat exchanger, which means a number of revolutions of the output shaft of the gear box of 30-300 rpm. The gear box is fixedly secured to the motor while forming a rigid unit 35 therewith. This unit 35 is fixed to an elongated plate-like member 36 having a bridge-like character by means of a bracket 37 and screws and nuts not shown.

Two projections 38 with a cross section having an L-shape are arranged at each end of said plate-like member. Corresponding openings with an L-shape are carried out in a pad 40, 41 of foamed plastic, here foamed polyurethane, received in a bottom frame 42, 43 fixed with respect to walls of 29, 30 of the casing and these openings receive said projections.

This means that the plate-like element 36 carrying the unit 35 of motor 31 and gear box 32 is hanging freely at a distance (see Fig 5) from members fixed with respect to walls of the casing while allowing movement thereof in three dimensions while compressing parts of said pads 40, 41 and storing potential energy therein. The consequence of this is that vibrations of the plate-like member 36 caused by the operation of the motor will be to a large extent absorbed by this possibility of the plate-like member 36 to move around a rest position with respect to the fixed frames 42, 43 and by that the casing.

Measurements carried out by an accelerometer on a wall upon which the casing 8 is arranged have shown a reduction of accelerations of vibrations emanating from the operation of said motor 31 from about 90 mm/sec² with the unit of motor and gear box fixed with respect to the casing down to 10 mm/sec² with the floating suspension of the unit 35 according to the present invention.

It is pointed out that Fig 4 is a partly exploded view showing how the pad 40 is received in the bottom frame 42.

The invention is of course not in any way restricted to the embodiment described above, but many possibilities to modifications thereof would be apparent to a person with ordinary skill in the art without departing from the scope of the invention as defined in the appended claims.

Other types of means for floatingly suspending the motor than pads, such as different types of springs, are conceivable. It would also be possible to have more than one pad at each end of a member to which the motor is secured.

The shape of members carrying the motor and suspending it with respect to the casing may be any suitable for a particular application.

## Claims

1. An air treating device to be arranged inside a building and comprising a casing (8) containing:
• a rotary heat exchanger (27) comprising a body (28) and a motor (31) configured to rotate said body,
• an arrangement configured to keep said motor at a determined location inside said casing, and
• means (22, 24) configured to create air flows through said body of the rotary heat exchanger for heat transfer from a warmer such air flow to a colder one,
**characterized in that** said arrangement comprises suspending means (36, 40-43) configured to floatingly suspend said motor (31) with respect to said casing (8) so as to allow movements of said motor with respect to the casing around a rest position while storing potential energy, that said suspending means comprises members (40, 41) of cushioning material connecting said motor (31) to members (42, 43) fixed with respect to walls of the casing (8), that said members (40, 41) of cushioning material are pads interconnecting a member (36) fixed with respect to said motor (31), and members (42, 43) fixed with respect to walls of said casing (8), that said arrangement comprises an elongated plate-like member (36) fixedly secured with respect to and carrying the motor (31), and that the opposite ends of said elongated member are configured to be connected through said pads (40, 41) to a said member (42, 43) fixed with respect to walls of said casing (8).

2. A device according to claim 1, **characterized in that** said suspending means (36, 40-43) are configured to suspend said motor (31) with respect to said casing (8) for allowing movement of the motor with respect to said casing in three dimensions.

3. A device according to claim 1 or 2, **characterized in that** said cushioning material is foamed plastic, preferably foamed polyurethane.

4. An device according to any of claims 1-3, **characterized in that** said members (42, 43) fixed with respect to walls of said casing comprises bottom frames designed to each receive at least one said pad (40, 41) therein so as to allow movement of a said member fixed with respect to said motor (31) by compressing parts of said at least one pad against parts of said frame (42, 43).

5. A device according to any of claims 1-4, **characterized in that** said plate-like member (36) has a bridge-like character by hanging freely along the longitudinal extension thereof at a distance from members fixed with respect to walls of said casing (8).

6. A device according to any of claims 1-5, **characterized in that** said plate-like member (36) is through said pads (40, 41) connected to opposite partition walls (29, 30) fixed inside said casing (8).

7. A device according to claim 6, **characterized in that** said body (28) of the rotary heat exchanger is journalled in bearings in said partition walls (29, 30).

8. A device according to any of the preceding claims, **characterized in that** it comprises a gear box (32) fixedly secured to said motor (31) while forming a rigid unit (35) therewith, and that this unit is floatingly suspended with respect to said casing (8).

9. A device according to claim 8, **characterized in that** said unit (35) is configured to deliver a rotation of the output shaft of said gear box (32) with a number of revolutions being 30-300 rpm, preferably 50-200 rpm.

10. A device according to any of the preceding claims, **characterized in that** said motor (31) is configured to operate with a number of revolutions of an output shaft thereof of 1000-5000 rpm, preferably 1200-3000 rpm.

11. A device according to any of the preceding claims, **characterized in that** it is a device for ventilating one or more rooms (2-6) of a building (7) while obtaining heat transfer between supply air from the exterior of the building and exhaust air to be conducted to the exterior of the building.

12. A device according to any of claims 1-10, **characterized in that** it is an air dehumidifying device.

## Patentansprüche

1. Vorrichtung zur Luftbehandlung, die innerhalb eines Gebäudes angeordnet werden soll und die ein Gehäuse (8) aufweist, das Folgendes umfasst:
• einen Rotationswärmetauscher (27), umfassend einen Körper (28) und einen Motor (31), der so konfiguriert ist, dass er den Körper in Rotation versetzt,
• eine Anordnung, die so konfiguriert ist, dass der Motor an einem bestimmten Ort innerhalb des Gehäuses gehalten wird, und
• Mittel (22, 24), die so konfiguriert sind, dass sie Luftströme durch den Körper des Rotationswärmetauschers zur Wärmeübertragung von einem wärmeren Luftstrom zu einem kälteren Luftstrom erzeugen,
**dadurch gekennzeichnet, dass** die Anordnung Aufhängemittel (36, 40-43) aufweist, die so konfiguriert sind, dass die den Motor (31) in Bezug auf das Gehäuse (8) schwebend halten, um Bewegungen des Motors in Bezug auf das Gehäuse um eine Ruheposition herum zu ermöglichen, während potentielle Energie gespeichert wird, dass die Aufhängemittel Teile (40, 41) von Polstermaterial umfassen, die den Motor (31) mit Teilen (42, 43) verbinden, die in Bezug auf Wände des Gehäuses (8) befestigt sind, dass die Teile (40, 41) des Dämpfungsmaterials Puffer sind, die ein Teil (36), das in Bezug auf den Motor (31) befestigt ist, und Teile (42, 43), die in Bezug auf Wände des Gehäuses (8) befestigt sind, miteinander verbinden, dass die Anordnung ein längliches, plattenartiges Teil (36) aufweist, das in Bezug auf den Motor (31) fest verbunden ist und ihn trägt, und dass die entgegengesetzten Enden des länglichen Teils so konfiguriert sind, dass sie über die Puffer (40, 41) mit einem Teil (42, 43) verbunden werden, das in Bezug auf Wände des Gehäuses (8) befestigt ist.

2. Vorrichtung nach Anspruch 1, **dadurch gekennzeichnet, dass** die Aufhängemittel (36, 40-43) so konfiguriert sind, dass der Motor (31) in Bezug auf das Gehäuse (8) aufgehängt wird, um die Bewegung des Motor in Bezug auf das Gehäuse in drei Dimensionen zu ermöglichen.

3. Vorrichtung nach Anspruch 1 oder 2, **dadurch gekennzeichnet, dass** das Dämpfungsmaterial Schaumstoff ist, vorzugsweise geschäumtes Polyurethan.

4. Vorrichtung nach einem der Ansprüche 1-3, **dadurch gekennzeichnet, dass** die Teile (42, 43), die in Bezug auf Wände des Gehäuses befestigt sind, Bodenrahmen aufweisen, die jeweils mindestens einen Puffer (40, 41) darin aufnehmen sollen, um die Bewegung eines Teils, das mit Bezug auf den Motor (31) befestigt ist, zu ermöglichen, indem Teile des mindestens einen Puffers gegen Teile des Rahmens (42, 43) gedrückt werden.

5. Vorrichtung nach einem der Ansprüche 1-4, **dadurch gekennzeichnet, dass** das plattenartige Teil (36) eine brückenartige Beschaffenheit aufweist, indem es frei entlang seiner Längenausdehnung in einer Entfernung von Teilen, die in Bezug auf Wände des Gehäuses (8) befestigt sind, hängt.

6. Vorrichtung nach einem der Ansprüche 1-5, **dadurch gekennzeichnet, dass** das plattenartige Teil (36) über die Puffer (40, 41) mit gegenüberliegenden Trennwänden (29, 30), die innerhalb des Gehäuses (8) befestigt sind, verbunden ist.

7. Vorrichtung nach Anspruch 6, **dadurch gekennzeichnet, dass** der Körper (28) des Rotationswärmetauschers in Lagern in den Trennwänden (29, 30) gelagert, ist.

8. Vorrichtung nach einem der vorhergehenden Ansprüche, **dadurch gekennzeichnet, dass** sie einen Getriebekasten (32) aufweist, der fest mit dem Motor (31) verbunden ist und dabei eine starre Einheit (35) mit ihm bildet, und dass diese Einheit schwebend in Bezug auf das Gehäuse (8) aufgehängt ist.

9. Vorrichtung nach Anspruch 8, **dadurch gekennzeichnet, dass** die Einheit (35) so konfiguriert ist, dass sie zu einer Rotation der Abtriebswelle des Getriebekastens (32) mit einer Drehzahl von 30-300 UpM, vorzugsweise 50-200 UpM führt.

10. Vorrichtung nach einem der vorhergehenden Ansprüche, **dadurch gekennzeichnet, dass** der Motor (31) so konfiguriert ist, dass er mit einer Drehzahl einer Abtriebswelle davon von 1000-5000 UpM, vorzugsweise 1200-3000 UpM arbeitet.

11. Vorrichtung nach einem der vorhergehenden Ansprüche, **dadurch gekennzeichnet, dass** es sich hierbei um eine Vorrichtung für das Belüften von einem Raum oder mehreren Räumen (2-6) eines Gebäudes (7) handelt, wobei eine Wärmeübertragung zwischen Zuluft von außerhalb des Gebäudes und Abluft, die nach außerhalb des Gebäudes abgeführt werden soll, erreicht wird.

12. Vorrichtung nach einem der Ansprüche 1-10, **dadurch gekennzeichnet, dass** es sich um eine Entfeuchtungsvorrichtung handelt.

## Revendications

1. Dispositif de traitement d'air destiné à être agencé à l'intérieur d'un bâtiment et comprenant un boîtier (8) contenant :
- un échangeur de chaleur rotatif (27) comprenant un corps (28) et un moteur (31) configuré pour faire tourner ledit corps,
- un agencement configuré pour maintenir ledit moteur dans un emplacement prédéterminé à l'intérieur dudit boîtier, et
- des moyens (22, 24) configurés pour créer des écoulements d'air à travers ledit corps de l'échangeur de chaleur rotatif pour le transfert de chaleur d'un tel écoulement d'air plus chaud à un plus froid,
**caractérisé en ce que** ledit agencement comprend des moyens de suspension (36, 40 à 43) configurés pour suspendre de façon flottante ledit moteur (31) par rapport audit boîtier (8) afin de permettre des mouvements dudit moteur par rapport au boîtier autour d'une position de repos tout en stockant de l'énergie potentielle, **en ce que** lesdits moyens de suspension comprennent des éléments (40, 41) de matériau amortisseur reliant ledit moteur (31) à des éléments (42, 43) fixes par rapport à des parois du boîtier (8), **en ce que** lesdits éléments (40, 41) de matériau amortisseur sont des patins reliant mutuellement un élément (36) fixe par rapport audit moteur (31) et des éléments (42, 43) fixes par rapport à des parois dudit boîtier (8), **en ce que** ledit agencement comprend un élément allongé en forme de plaque (36) fixé de façon fixe par rapport au moteur (31) et supportant celui-ci, et **en ce que** les extrémités opposées dudit élément allongé sont configurées pour être reliées par l'intermédiaire desdits patins (40, 41) à un dit élément (42, 43) fixe par rapport à des parois dudit boîtier (8).

2. Dispositif selon la revendication 1, **caractérisé en ce que** lesdits moyens de suspension (36, 40 à 43) sont configurés pour suspendre ledit moteur (31) par rapport audit boîtier (8) pour permettre le mouvement du moteur par rapport audit boîtier dans trois dimensions.

3. Dispositif selon la revendication 1 ou 2, **caractérisé en ce que** ledit matériau amortisseur est du plastique expansé, de préférence du polyuréthanne expansé.

4. Dispositif selon l'une quelconque des revendications 1 à 3, **caractérisé en ce que** lesdits éléments (42, 43) fixes par rapport à des parois dudit boîtier comprennent des cadres inférieurs conçus chacun pour recevoir au moins un dit patin (40, 41) dans celui-ci afin de permettre un mouvement d'un dit élément fixe par rapport audit moteur (31) en comprimant des parties dudit au moins un patin contre des parties dudit cadre (42, 43).

5. Dispositif selon l'une quelconque des revendications 1 à 4, **caractérisé en ce que** ledit élément en forme de plaque (36) a l'aspect d'un pont en étant suspendu librement le long de l'extension longitudinale de celui-ci à une distance d'éléments fixes par rapport à des parois dudit boîtier (8).

6. Dispositif selon l'une quelconque des revendications 1 à 5, **caractérisé en ce que** ledit élément en forme de plaque (36) est, par l'intermédiaire desdits patins (40, 41), relié à des parois de séparation opposées (29, 30) fixes à l'intérieur dudit boîtier (8).

7. Dispositif selon la revendication 6, **caractérisé en ce que** ledit corps (28) de l'échangeur de chaleur rotatif est tourillonné dans des paliers dans lesdites parois de séparation (29, 30).

8. Dispositif selon l'une quelconque des revendications précédentes, **caractérisé en ce qu'**il comprend une boîte à engrenages (32) fixée de façon fixe audit moteur (31) tout en formant une unité rigide (35) avec celui-ci, et que cette unité est suspendue de façon flottante par rapport audit boîtier (8).

9. Dispositif selon la revendication 8, **caractérisé en ce que** ladite unité (35) est configurée pour fournir une rotation de l'arbre de sortie de ladite boîte à engrenages (32) avec un nombre de révolutions de 30 à 300 tr/min, de préférence 50 à 200 tr/min.

10. Dispositif selon une quelconque des revendications précédentes, **caractérisé en ce que** ledit moteur (31) est configuré pour fonctionner avec un nombre de révolutions d'un arbre de sortie de celui-ci de 1000 à 5000 tr/min, de préférence 1200 à 3000 tr/min.

11. Dispositif selon une quelconque des revendications précédentes, **caractérisé en ce qu'**il s'agit d'un dispositif pour ventiler une ou plusieurs pièces (2 à 6) d'un bâtiment (7) tout en obtenant un transfert de chaleur entre de l'air d'alimentation à partir de l'extérieur du bâtiment et de l'air d'échappement destiné à être conduit vers l'extérieur du bâtiment.

12. Dispositif selon une quelconque des revendications 1 à 10, **caractérisé en ce qu'**il s'agit d'un dispositif de déshumidification d'air.
